(19) Europäisches Patentamt
European Patent Office
Office européen des brevets

(11) EP 2 980 175 A1

(12) EUROPEAN PATENT APPLICATION
published in accordance with Art. 153(4) EPC

(43) Date of publication:
03.02.2016 Bulletin 2016/05

(21) Application number: 14774052.6

(22) Date of filing: 12.03.2014

(51) Int Cl.:
*C09J 7/02* (2006.01)
*B32B 27/00* (2006.01)
*C09J 109/06* (2006.01)
*C09J 125/10* (2006.01)
*C09J 153/02* (2006.01)

(86) International application number:
PCT/JP2014/056497

(87) International publication number:
WO 2014/156651 (02.10.2014 Gazette 2014/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 27.03.2013 JP 2013066380

(71) Applicants:
- Kuraray Co., Ltd.
  Okayama 710-0801 (JP)
- Amyris, Inc.
  Emeryville, CA 94608 (US)

(72) Inventors:
- SASAKI, Hiromitsu
  Kamisu-shi
  Ibaraki 314-0197 (JP)
- UEHARA, Yosuke
  Kamisu-shi
  Ibaraki 314-0197 (JP)
- TANAKA, Yusuke
  Kamisu-shi
  Ibaraki 314-0197 (JP)

(74) Representative: Müller-Boré & Partner
Patentanwälte PartG mbB
Friedenheimer Brücke 21
80639 München (DE)

# (54) LAMINATE, PROTECTIVE FILM AND MEHOD FOR MANUFACTURING LAMINATE

(57) The present invention relates to a laminate including an adhesive layer that hardly suffers from adhesive transfer and exhibits a good adhesive strength, and a substrate layer, a protective film including the laminate, and a process for producing the laminate. The laminate of the present invention includes an adhesive layer and a substrate layer, in which the adhesive layer includes a hydrogenated product of a copolymer containing a constitutional unit (a) derived from an aromatic vinyl compound and a constitutional unit (b) derived from a conjugated diene; a content of a constitutional unit (b1) derived from farnesene in a whole amount of the constitutional unit (b) derived from the conjugated diene is from 1 to 100% by mass, and a content of a constitutional unit (b2) derived from a conjugated diene other than farnesene in a whole amount of the constitutional unit (b) derived from the conjugated diene is from 0 to 99% by mass; and a hydrogenation rate of carbon-carbon double bonds in the constitutional unit (b) derived from the conjugated diene is 50 mol% or more.

EP 2 980 175 A1

## Description

Technical Field

The present invention relates to a laminate including a substrate layer and an adhesive layer, a protective film including the laminate, and a process for producing the laminate.

Background Art

As the method of protecting a surface of various materials such as a metal plate, a synthetic resin plate and a glass plate against staining and damage, there are conventionally known technologies for coating such a surface with a so-called surface protective film. The surface protective film generally has a laminated structure including a substrate layer and a layer having an adhesive strength (adhesive layer). The adhesive layer is formed by applying an adhesive onto the substrate layer or co-extruding the adhesive together with the substrate layer.
For example, a prism sheet used in liquid crystal displays is coated with the aforementioned surface protective film to protect a surface thereof against deposition of dusts and dirt thereon and damage thereto.
It is known in the art that the adhesive layer used in the above surface protective film is formed of an adhesive composition including a styrene-based elastomer and a tackifier resin.
For example, PTL1 discloses an adhesive composition including a block copolymer having a structure represented by A-B-A or A-B in which A is a styrene-based polymer block, and B is a butadiene polymer block, an isoprene polymer block or a polymer block obtained by hydrogenating any of these blocks, a tackifier resin and a polyolefin-based resin. In addition, PTL1 also discloses a surface protective film including a substrate and an adhesive layer obtained from the above adhesive composition which is formed on one surface of the substrate.
Also, PTL2 discloses a surface protective film including a polyolefin-based substrate layer and an adhesive layer in which the adhesive layer contains a styrene-based elastomer containing a vinyl-polyisoprene block, a polyolefin and a tackifier resin, and has a Martens hardness of not less than 1.0 $N/mm^2$ and not more than 2.5 $N/mm^2$.
Meanwhile, although PTL3 and PTL4 describe a polymer of β-farnesene, sufficient studies on practical use or applications of the polymer are not made therein.

Citation List

Patent Literature

PTL1: JP 5-194923A
PTL2: JP 2010-126711A
PTL3: JP 2012-502135A
PTL4: JP 2012-502136A

Summary of Invention

Technical Problem

In the respective surface protective films described in PTL1 and PTL2, the adhesive layer contains the tackifier resin.
However, if a content of the tackifier resin in the adhesive layer is excessively large, there tends to occur such a phenomenon that when peeling the surface protective film from an adherend such as liquid crystal displays, a part of the adhesive layer remains deposited on the adherend (the phenomenon is hereinafter also referred to as "adhesive transfer"). On the other hand, if a content of the tackifier resin in the adhesive layer is excessively small, the surface protective film tends to be insufficient in adhesive strength.
The present invention relates to a laminate including an adhesive layer that hardly suffers from adhesive transfer and exhibits a practical adhesive strength, and a substrate layer, a protective film including the laminate, and a process for producing the laminate.

Solution to Problem

The present invention relates to the following aspects [1] to [3].

[1] A laminate including an adhesive layer and a substrate layer, the adhesive layer including a hydrogenated product of a copolymer containing a constitutional unit (a) derived from an aromatic vinyl compound and a constitutional unit (b) derived from a conjugated diene,
a content of a constitutional unit (b1) derived from farnesene in a whole amount of the constitutional unit (b) derived from the conjugated diene being from 1 to 100% by mass, and a content of a constitutional unit (b2) derived from a conjugated diene other than farnesene in a whole amount of the constitutional unit (b) derived from the conjugated diene being from 0 to 99% by mass, and
a hydrogenation rate of carbon-carbon double bonds in the constitutional unit (b) derived from the conjugated diene being 50 mol% or more.
[2] A protective film including the laminate according to the above aspect [1].
[3] A process for producing the laminate according to the above aspect [1], including the step of co-extruding a first resin composition including the hydrogenated product of the copolymer and a resin constituting the substrate layer.

Advantageous Effects of Invention

According to the present invention, there can be provided a laminate including an adhesive layer that hardly suffers from adhesive transfer and exhibits a practical adhesive strength, and a substrate layer, a protective film including the laminate, and a process for producing the laminate.

Description of Embodiments

[1] Laminate

The laminate of the present invention includes an adhesive layer and a substrate layer. The adhesive layer includes a hydrogenated product of a copolymer containing a constitutional unit (a) derived from an aromatic vinyl compound and a constitutional unit (b) derived from a conjugated diene (the copolymer may also be hereinafter referred to merely as a "copolymer", and the hydrogenated product of the copolymer may also be hereinafter referred to merely as a "hydrogenated copolymer"), in which a content of a constitutional unit (b1) derived from farnesene in a whole amount of the constitutional unit (b) derived from the conjugated diene is from 1 to 100% by mass, and a content of a constitutional unit (b2) derived from a conjugated diene other than farnesene in a whole amount of the constitutional unit (b) derived from the conjugated diene is from 0 to 99% by mass, and a hydrogenation rate of carbon-carbon double bonds in the constitutional unit (b) derived from the conjugated diene is 50 mol% or more.

[Adhesive Layer]

The adhesive layer formed in the laminate of the present invention contains the aforementioned hydrogenated copolymer.
The hydrogenated copolymer used in the present invention may be in the form of either a hydrogenated product of a block copolymer or a hydrogenated product of a random copolymer.
More specifically, the hydrogenated copolymer used in the present invention may be constituted of a hydrogenated product of a block copolymer including a polymer block (A) containing the constitutional unit (a) derived from the aromatic vinyl compound as a main component and a polymer block (B) containing the constitutional unit (b) derived from the conjugated diene as a main component (hereinafter also referred to merely as a "hydrogenated block copolymer").
In addition, the hydrogenated copolymer used in the present invention may also be constituted of a hydrogenated product of a random copolymer obtained by subjecting the constitutional unit (a) derived from the aromatic vinyl compound, the constitutional unit (b1) derived from farnesene and the constitutional unit (b2) derived from the conjugated diene other than farnesene to random polymerization (hereinafter also referred to merely as a "hydrogenated random copolymer").
Furthermore, the adhesive layer may also contain a tackifier resin and other resins, in addition to the aforementioned hydrogenated copolymer.

<Constitutional Unit (a) Derived From Aromatic Vinyl Compound>

The aforementioned copolymer contains the constitutional unit (a) derived from the aromatic vinyl compound. Examples of the aromatic vinyl compound include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene and divinylbenzene. These aromatic vinyl compounds may be used alone or in combination of any two or more thereof. Of these aromatic vinyl compounds, preferred are styrene, α-methylstyrene and 4-methylstyrene, and more preferred is styrene.

Meanwhile, in the present invention, compounds containing both of an aromatic group and a conjugated diene bond in a molecule thereof should be excluded from the conjugated diene as the component from which the constitutional unit (b) is derived, and should be included in the aromatic vinyl compound as the component from which the constitutional unit (a) is derived. However, the content of a constitutional unit derived from the compounds containing both of an aromatic group and a conjugated diene bond in a molecule thereof in the constitutional unit (a) is preferably not more than 10% by mass, more preferably not more than 5% by mass, still more preferably not more than 1% by mass, and even still more preferably not more than 0% by mass.

<Constitutional Unit (b) Derived From Conjugated Diene>

The aforementioned copolymer contains the constitutional unit (b) derived from the conjugated diene. The copolymer contains a constitutional unit (b1) derived from farnesene as the constitutional unit (b), and may further contain a constitutional unit (b2) derived from a conjugated diene other than farnesene as the constitutional unit (b).

Meanwhile, the farnesene may be industrially produced from sugars as a raw material which are extracted from plants such as canes by using microorganisms. Thus, the adhesive layer formed in the laminate of the present invention can be produced with a less burden on environments by using the farnesene as a raw material.

(Constitutional Unit (b1) Derived From Farnesene)

The aforementioned copolymer contains the constitutional unit (b1) derived from farnesene. The farnesene as the component from which the constitutional unit (b1) is derived may be either α-farnesene or β-farnesene represented by the following formula (I), or α-farnesene and β-farnesene may be used in combination with each other to form the constitutional unit (b1).

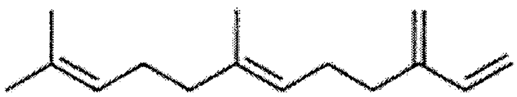

(I)

The content of a constitutional unit derived from β-farnesene in the constitutional unit (b1) is preferably not less than 60% by mass, more preferably not less than 80% by mass, still more preferably not less than 90% by mass, even still more preferably not less than 99% by mass, and further even still more preferably 100% by mass, from the viewpoints of facilitating production of the copolymer, reducing occurrence of adhesive transfer of the resulting adhesive layer and attaining a high adhesive strength thereof.

(Constitutional Unit (b2) Derived From Conjugated Diene Other Than Farnesene)

The aforementioned copolymer may contain a constitutional unit (b2) derived from a conjugated diene other than farnesene. Examples of the conjugated diene other than farnesene as the component from which the constitutional unit (b2) is derived include butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene and chloroprene. These conjugated dienes other than farnesene may be used alone or in combination of any two or more thereof. Of these conjugated dienes other than farnesene, preferred is at least one compound selected from the group consisting of butadiene, isoprene and myrcene, and more preferred is at least one compound selected from the group consisting of butadiene and isoprene.

The content of the constitutional unit (b1) derived from farnesene in a whole amount of the constitutional unit (b) derived from the conjugated diene is from 1 to 100% by mass, preferably from 40 to 100% by mass, and more preferably from 50 to 100% by mass.

Also, the content of the constitutional unit (b2) derived from the conjugated diene other than farnesene in a whole amount of the constitutional unit (b) derived from the conjugated diene is from 0 to 99% by mass, preferably from 0 to 60% by mass, and more preferably from 0 to 50% by mass.

<Other Constitutional Unit (c)>

The aforementioned copolymer may also contain the other constitutional unit (c) in addition to the constitutional units (a), (b1) and (b2).
Examples of compounds as the component from which the other constitutional unit (c) is derived include unsaturated hydrocarbon compounds such as propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene; functional group-containing unsaturated compounds such as acrylic acid, methacrylic acid, methyl acrylate, methyl methacrylate, acrylonitrile, methacrylonitrile, maleic acid, fumaric acid, crotonic acid, itaconic acid, 2-acryloylethanesulfonic acid, 2-methacryloylethanesulfonic acid, 2-acrylamide-2-methylpropanesulfonic acid, 2-methacrylamide-2-methylpropanesulfonic acid, vinylsulfonic acid, vinyl acetate and methyl vinyl ether; and the like. These compounds as the component from which the other constitutional unit (c) is derived may be used alone or in combination of any two or more thereof.

<Copolymer>

The copolymer of the present invention contains the aforementioned constitutional unit (a) derived from the aromatic vinyl compound and the aforementioned constitutional unit (b) derived from the conjugated diene. Meanwhile, the copolymer may further contain the aforementioned constitutional unit (c).
The total content of the constitutional unit (a) and the constitutional unit (b) in the copolymer is preferably not less than 60% by mass, more preferably not less than 80% by mass, still more preferably not less than 90% by mass, and even still more preferably not less than 99% by mass, from the viewpoints of reducing occurrence of adhesive transfer of the resulting adhesive layer and attaining a high adhesive strength thereof.
In addition, from the same viewpoints as described above, the content of the constitutional unit (c) in a whole amount of the constitutional units constituting the copolymer is preferably not more than 40% by mass, more preferably not more than 20% by mass, still more preferably not more than 10% by mass, and even still more preferably not more than 1% by mass.
The content of the constitutional unit (a) in the copolymer is preferably from 1 to 99% by mass, more preferably from 2 to 90% by mass, still more preferably from 3 to 85% by mass, even still more preferably from 5 to 80% by mass, further even still more preferably from 10 to 50% by mass, and further even still more preferably from 15 to 45% by mass, from the viewpoints of reducing occurrence of adhesive transfer of the resulting adhesive layer and attaining a high adhesive strength thereof.
The mass ratio of a whole amount of the constitutional unit (a) to a whole amount of the constitutional unit (b) [(a)/(b)] is preferably from 1/99 to 99/1, more preferably from 2/98 to 90/10, still more preferably from 3/97 to 85/15, even still more preferably from 5/95 to 80/20, further even still more preferably from 10/90 to 60/40, and further even still more preferably from 10/90 to 50/50, from the viewpoints of reducing occurrence of adhesive transfer of the resulting adhesive layer and attaining a high adhesive strength thereof.
The copolymer of the present invention may be in the form of either a block copolymer or a random copolymer. Next, these two kinds of copolymers are explained.

(Block Copolymer)

As described above, the copolymer of the present invention may be in the form of a block copolymer including a polymer block (A) containing the constitutional unit (a) derived from the aromatic vinyl compound as a main component and a polymer block (B) containing the constitutional unit (b) derived from the conjugated diene as a main component.
The expression "as a main component" as used herein means that the content of the constitutional unit (a) derived from the aromatic vinyl compound on the basis of a total mass of the polymer block (A) is not less than 50% by mass, preferably not less than 70% by mass, and more preferably not less than 90% by mass, and also means that the content of the constitutional unit (b) derived from the conjugated diene on the basis of a total mass of the polymer block (B) is not less than 50% by mass, preferably not less than 65% by mass, and more preferably not less than 80% by mass.
The polymer block (B) preferably contains from 1 to 100% by mass of the constitutional unit (b1) derived from farnesene and from 99 to 0% by mass of the constitutional unit (b2) derived from the conjugated diene other than farnesene. The preferred specific examples and content ratios of the constitutional units (b1) and (b2) are the same as described above.
Furthermore, the polymer block (B) may also contain a small amount of a constitutional unit derived from the other copolymerizable monomer unless the object and effects of the present invention are adversely affected. Examples of the other copolymerizable monomer include anion-polymerizable copolymerizable monomers, e.g., aromatic vinyl compounds such as styrene, $\alpha$-methylstyrene, o-methylstyrene, m-methylstyrene, p-methylstyrene, 1,3-dimethylstyrene,

diphenylethylene, 1-vinylnaphthalene, 4-propylstyrene, 4-cyclohexylstyrene, 4-dodecylstyrene, 2-ethyl-4-benzylstyrene and 4-(phenylbutyl)styrene. These other copolymerizable monomers may be used alone or in combination of any two or more thereof. In the case where the polymer block contains the constitutional unit derived from the other copolymerizable monomer, the constitutional unit may be bonded thereto either in a random form or in a tapered form.

In the case where the polymer block (B) contains the constitutional unit derived from the other copolymerizable monomer, the content of the constitutional unit derived from the other copolymerizable monomer in the polymer block is preferably not more than 35% by mass, more preferably not more than 10% by mass, and still more preferably not more than 5% by mass.

The bonding configuration of each of the polymer block (A) and the polymer block (B) is not particularly limited, and may be either a linear configuration, a branched configuration, a radial configuration or a combination of any two or more of these configurations. Of these bonding configurations, when representing the polymer block (A) and the polymer block (B) by A and B, respectively, from the viewpoints of reducing occurrence of adhesive transfer of the resulting adhesive layer and attaining a high adhesive strength thereof, preferred are the bonding configuration in which the respective polymer blocks are linearly bonded to each other as is represented by $(A\text{-}B)_l$, $A\text{-}(B\text{-}A)_m$ or $B\text{-}(A\text{-}B)_n$ wherein l, m and n are each independently an integer of 1 or more, and the bonding configuration in which the respective polymer blocks are radially bonded to each other as is represented by $(A\text{-}B)_pX$ or $(B\text{-}A)_qX$ wherein p and q are each independently an integer of 3 or more, and X is a residue of a coupling reagent.

Of these copolymers having the above bonding configurations, from the viewpoints of reducing occurrence of adhesive transfer of the resulting adhesive layer and attaining a high adhesive strength thereof, preferred are a di-block copolymer having the bonding configuration represented by A-B or a tri-block copolymer having the bonding configuration represented by A-B-A.

In addition, in the case where the block copolymer contains two or more polymer blocks (A) or two or more polymer blocks (B), the two or more polymer blocks (A) or (B) may be respectively polymer blocks constituted of the same constitutional units or polymer blocks constituted of different kinds of constitutional units from each other. For example, in the two polymer blocks (A) present in the tri-block copolymer represented by [A-B-A], the respective aromatic vinyl compounds contained therein may be constituted of either the same kind of compound or different kinds of compounds.

(Random Copolymer)

Further, as described above, the copolymer of the present invention may be in the form of a random copolymer obtained by subjecting the constitutional unit (a) derived from the aromatic vinyl compound, the constitutional unit (b1) derived from farnesene, and the constitutional unit (b2) derived from the conjugated diene other than farnesene to random polymerization.

<Hydrogenated Copolymer>

The hydrogenated copolymer used in the laminate of the present invention is produced by hydrogenating the aforementioned copolymer in which 50 mol% or more of carbon-carbon double bonds in the constitutional unit (b) derived from the conjugated diene are hydrogenated, namely the hydrogenation rate of carbon-carbon double bonds in the constitutional unit (b) derived from the conjugated diene is 50 mol% or more.

The hydrogenation rate as used herein is the value represented by the following formula:

$$\text{Hydrogenation rate} = (1 - M2/M1) \times 100\ (\text{mol\%})$$

wherein M1 is a molar number of double bonds derived from the conjugated diene which are contained per 1 mole of the copolymer; and M2 is a molar number of double bonds derived from the conjugated diene which are contained per 1 mole of the hydrogenated copolymer.

The hydrogenation rate is preferably not less than 60 mol%, and more preferably not less than 70 mol%, from the viewpoints of reducing occurrence of adhesive transfer of the resulting adhesive layer and improving a heat resistance and a weather resistance thereof. Meanwhile, the hydrogenation rate may be determined by the method described below in Examples.

The peak top molecular weight (Mp) of the hydrogenated copolymer is preferably from 4,000 to 1,500,000, more preferably from 9,000 to 1,200,000, still more preferably from 20,000 to 1,100,000, and most preferably from 20,000 to 800,000, from the viewpoints of reducing occurrence of adhesive transfer of the resulting adhesive layer and attaining a high adhesive strength thereof.

Meanwhile, Mp as used in the present specification means the value measured by the method described below in Examples.

The molecular weight distribution (Mw/Mn) of the hydrogenated copolymer is preferably from 1 to 4, more preferably from 1 to 3, and still more preferably from 1 to 2. When Mw/Mn of the hydrogenated copolymer falls within the above-specified range, the hydrogenated copolymer can exhibit excellent effects of reducing occurrence of adhesive transfer of the resulting adhesive layer and attaining a high adhesive strength thereof.

<Process for Producing Hydrogenated Copolymer>

The hydrogenated copolymer may be suitably produced by a process including a polymerization step of obtaining the copolymer containing the constitutional unit (a) derived from the aromatic vinyl compound and the constitutional unit (b) derived from the conjugated diene by anionic polymerization; and a hydrogenation step of hydrogenating 50 mol% or more of carbon-carbon double bonds in the constitutional unit (b) derived from the conjugated diene.

Next, the process for producing the hydrogenated block copolymer is described in more detail below.

(Process for Producing Hydrogenated Block Copolymer)

The hydrogenated block copolymer may be suitably produced by a process including a polymerization step of obtaining a block copolymer including a polymer block (A) containing the constitutional unit (a) derived from the aromatic vinyl compound as a main component and a polymer block (B) containing the constitutional unit (b) derived from the conjugated diene as a main component by anionic polymerization; and a hydrogenation step of hydrogenating 50 mol% or more of carbon-carbon double bonds in the constitutional unit (b) derived from the conjugated diene.

«Polymerization Step»

The block copolymer may be produced by any suitable polymerization methods such as a solution polymerization method or the methods described in JP 2012-502135A and JP 2012-502136A, in particular, is preferably produced by the solution polymerization method. For example, various conventionally known polymerization methods including an ionic polymerization method such as an anionic polymerization method and a cationic polymerization method, a radical polymerization method or the like may be applied thereto. Of these methods, the anionic polymerization method is preferably used. In the anionic polymerization method, the aromatic vinyl compound, and farnesene and/or the conjugated diene other than farnesene are preferably sequentially added in the presence of a solvent and an anionic polymerization initiator as well as, if required, a Lewis base as an optional component, thereby obtaining the block copolymer.

Examples of the anionic polymerization initiator include alkali metals such as lithium, sodium and potassium; alkali earth metals such as beryllium, magnesium, calcium, strontium and barium; lanthanoid-based rare earth metals such as lanthanum and neodymium; and compounds containing the above alkali metals, alkali earth metals or lanthanoid-based rare earth metals. Of these anionic polymerization initiators, preferred are the alkali metals, the compounds containing the alkali metals, and organic alkali metal compounds.

Specific examples of the organic alkali metal compounds include organic lithium compounds such as methyl lithium, ethyl lithium, n-butyl lithium, sec-butyl lithium, t-butyl lithium, hexyl lithium, phenyl lithium, stilbene lithium, dilithiomethane, dilithionaphthalene, 1,4-dilithiobutane, 1,4-dilithio-2-ethyl cyclohexane and 1,3,5-trilithlobenzene; and sodium naphthalene and potassium naphthalene, etc. Among these organic alkali metal compounds, preferred are organic lithium compounds; more preferred are n-butyl lithium and sec-butyl lithium; and still more preferred is sec-butyl lithium. Meanwhile, the organic alkali metal compound may be reacted with a secondary amine such as diisopropylamine, dibutylamine, dihexylamine and dibenzylamine to use the compound in the form of an organic alkali metal amide.

The amount of the organic alkali metal compound used for the polymerization may vary depending upon a molecular weight of the resulting block copolymer, and is usually in the range of from 0.01 to 3% by mass on the basis of a total amount of the aromatic vinyl compound, and farnesene and/or the conjugated diene other than farnesene.

The solvent used in the polymerization step is not particularly limited unless it adversely affects the anionic polymerization reaction. Examples of the solvent used in the polymerization step include saturated aliphatic hydrocarbons such as n-pentane, isopentane, n-hexane, n-heptane and isooctane; saturated alicyclic hydrocarbons such as cyclopentane, cyclohexane and methylcyclopentane; and aromatic hydrocarbons such as benzene, toluene and xylene. These solvents may be used alone or in combination of any two or more thereof. The amount of the solvent used in the polymerization step is not particularly limited.

The Lewis base acts for controlling a microstructure of each of the constitutional unit (b1) derived from farnesene and the constitutional unit (b2) derived from the conjugated diene other than farnesene. Examples of the Lewis base include ether compounds such as dibutyl ether, diethyl ether, tetrahydrofuran, dioxane and ethylene glycol diethyl ether; pyridine; tertiary amines such as N,N,N',N'-tetramethyl ethylenediamine and trimethylamine; alkali metal alkoxides such

as potassium-t-butoxide; and phosphine compounds. The amount of the Lewis base, if used, is usually preferably in the range of from 0.01 to 1,000 mol equivalent on the basis of 1 mol of the anionic polymerization initiator.

The temperature used in the above polymerization reaction is usually from -80 to 150°C, preferably from 0 to 100°C and more preferably from 10 to 90°C. The polymerization reaction may be carried out by either a batch method or a continuous method. The respective monomers, i.e., the aromatic vinyl compound, and farnesene and/or the conjugated diene other than farnesene may be supplied to the polymerization reaction solution in a continuous or intermittent manner such that the abundance ratio of each of the aromatic vinyl compound, and farnesene and/or the conjugated diene other than farnesene in the polymerization reaction system falls within a specific range, or the aromatic vinyl compound, and farnesene and/or the conjugated diene other than farnesene may be sequentially polymerized such that the ratio of the respective monomers in the polymerization reaction solution is controlled to a specific range, whereby it is possible to produce the block copolymer.

The polymerization reaction may be stopped by adding an alcohol such as methanol and isopropanol as a terminating reagent to the reaction system. The resulting polymerization reaction solution may be poured into a poor solvent such as methanol to precipitate the block copolymer. Alternatively, there may be used the method in which the polymerization reaction solution is rinsed with water, and then the obtained reaction product is separated from the water layer and dried to isolate the block copolymer therefrom.

In the polymerization step, the block copolymer can be obtained in the form of an unmodified block copolymer as described above. However, the block copolymer may also be in the form of a modified block copolymer obtained by the following method.

The above block copolymer may be modified prior to the below-mentioned hydrogenation step. Examples of a functional group that may be introduced into the block copolymer include an amino group, an alkoxysilyl group, a hydroxyl group, an epoxy group, a carboxyl group, a carbonyl group, a mercapto group, an isocyanate group and an acid anhydride group.

As the method of modifying the block copolymer, there may be used, for example, the method in which before adding the terminating reagent, a coupling reagent such as tin tetrachloride, tetrachlorosilane, dimethyldichlorosilane, dimethyldiethoxysilane, tetramethoxysilane, tetraethoxysilane, 3-aminopropyltriethoxysilane, tetraglycidyl-1,3-bisaminomethylcyclohexane and 2,4-tolylene diisocyanate which are capable of reacting with an active end of the polymer chain, a chain end-modifying reagent such as 4,4'-bis(diethylamino)benzophenone and N-vinylpyrrolidone, or the other modifying reagent as described in JP 2011-132298A is added to the polymerization reaction system. Furthermore, the isolated block copolymer may be grafted with maleic anhydride or the like.

The site of the block polymer into which the functional group is introduced may be either a chain end or a side chain of the polymer. In addition, these functional groups may be used alone or in combination of any two or more thereof. The modifying reagent is usually preferably used in an amount of from 0.01 to 10 mol equivalent on the basis of the anionic polymerization initiator used in the polymerization step.

«Hydrogenation Step»

When the block copolymer obtained by the above method is subjected to the hydrogenation step, it is possible to produce the hydrogenated block copolymer. As the hydrogenation method, there may be used conventionally known methods. For example, a solution prepared by dissolving the block copolymer in a solvent that has no adverse influence on the hydrogenation reaction is subjected to hydrogenation reaction in the presence of a hydrogenation catalyst. Examples of the hydrogenation catalyst include Ziegler-based catalysts; metal-supported catalysts obtained by supporting a metal such as nickel, platinum, palladium, ruthenium and rhodium on a carrier such as carbon, silica and diatomaceous earth; and organic metal complexes containing a metal such as cobalt, nickel, palladium, rhodium and ruthenium. In the hydrogenation step, the hydrogenation reaction may be carried out by adding the hydrogenation catalyst to the polymerization reaction solution containing the block copolymer obtained by the above method for producing the block copolymer.

In the hydrogenation reaction, a hydrogen pressure used therein is preferably from 0.1 to 20 MPa, the reaction temperature is preferably from 100 to 200°C, and the reaction time is preferably from 1 to 20 h.

The hydrogenation rate of carbon-carbon double bonds in the polymer block (B) contained in the hydrogenated block copolymer is preferably not less than 50 mol%, more preferably not less than 60 mol%, and still more preferably not less than 70 mol%, from the viewpoint of reducing occurrence of adhesive transfer of the resulting adhesive layer and improving a heat resistance and a weather resistance thereof. Meanwhile, the hydrogenation rate may be calculated by the method described below in Examples.

<Resin Component Constituting Adhesive Layer>

The adhesive layer in the laminate of the present invention may be constituted of the aforementioned hydrogenated copolymer solely as a resin component, or may also contains, in addition to the hydrogenated copolymer, a tackifier resin, a polyolefin-based resin and the other resins, etc., as a resin component. Further, the adhesive layer may also contain, in addition to the above resin component, additive components such as an inorganic filler which can be added to the resin component, if required.

<Tackifier Resin>

Examples of the tackifier resin include rosin-based resins, terpene-phenol resins, terpene resins, aromatic hydrocarbon-modified terpene resins, aliphatic petroleum resins, alicyclic petroleum resins, aromatic hydrocarbon resins, coumarone-indene resins, phenol-based resins, xylene resins, and hydrogenated products of these resins. These tackifier resins may be used alone or in combination of any two or more thereof. Meanwhile, from the viewpoints of reducing occurrence of adhesive transfer of the resulting adhesive layer and improving a heat resistance and a weather resistance thereof, hydrogenated tackifier resins are preferably used.

The softening point of the tackifier resin is preferably from 85 to 160°C, more preferably from 100 to 150°C, and still more preferably from 105 to 145°C. When the softening point of the tackifier resin is lower than 85°C, the resulting protective film tends to be deteriorated in adhesive strength at an elevated temperature (55°C). When the softening point of the tackifier resin is higher than 160°C, the resin composition constituting the adhesive layer tends to be deteriorated in moldability.

<Polyolefin-Based Resin>

From the viewpoints of attaining a good moldability of the adhesive layer, reducing occurrence of adhesive transfer of the adhesive layer and improving a heat resistance and a weather resistance thereof, a polyolefin-based resin may be used in the adhesive layer. Examples of the polyolefin-based resin include polyethylenes such as high-density polyethylene, medium-density polyethylene, low-density polyethylene and linear low-density polyethylene; homopolymers of propylene such as homo polypropylenes; block copolymers of propylene and ethylene (block polypropylenes) or random copolymers of propylene and ethylene (random polypropylenes); and copolymers of propylene or ethylene with $\alpha$-olefins. Examples of the $\alpha$-olefins include $\alpha$-olefins having 20 or less carbon atoms, such as 1-butene, 1-pentene, 3-methyl-1-butene, 1-hexene, 3-methyl-1-pentene, 4-methyl-1-pentene, 1-heptene, 1-octene, 1-nonene, 1-decene, 1-dodecene, 1-tetradecene, 1-hexadecene, 1-octadecene and 1-eicosene. These $\alpha$-olefins may be used alone or in combination of any two or more thereof.

In the case where the polyolefin-based resin is added to the adhesive layer, from the viewpoints of attaining a good moldability of the adhesive layer, reducing occurrence of adhesive transfer of the adhesive layer and improving a heat resistance and a weather resistance thereof, the amount of the polyolefin-based resin added is preferably in the range of from 5 to 100 parts by mass, and more preferably from 10 to 50 parts by mass, on the basis of 100 parts by mass of the hydrogenated product of the copolymer.

<Other Resins>

In addition, the adhesive layer may also contain a small amount of the other resins unless the object of the present invention is adversely affected. Examples of the other resins include polyisoprene, polybutadiene, styrene-butadiene rubbers, styrene-isoprene rubbers, ethylene-propylene copolymers, ethylene-vinyl acetate copolymers, ethylene-ethyl acrylate copolymers, ethylene-(meth)acrylic acid copolymers, metal ion-crosslinked resins of ethylene-(meth)acrylic acid copolymers (ionomers); styrene-based resin such as polystyrene, AS resins and ABS resins; polyphenylene ether-based resins; polyamide resins such as nylon 6 and nylon 66; polyester-based resins such as polyethylene terephthalate and polybutylene terephthalate; polyurethane-based resins; acetal-based resins such as polyoxymethylene homopolymers and polyoxymethylene copolymers; and acrylic resins such as polymethyl methacrylate-based resins.

The content of the hydrogenated copolymer in the adhesive layer is preferably not less than 70% by mass, more preferably not less than 80% by mass, still more preferably not less than 90% by mass, and even still more preferably not less than 95% by mass, on the basis of a total amount of the resin component constituting the adhesive layer, from the viewpoints of reducing occurrence of adhesive transfer of the resulting adhesive layer and attaining a high adhesive strength thereof.

The content of the tackifier resin in the adhesive layer is preferably not less than 1% by mass, more preferably not less than 5% by mass, still more preferably not less than 10% by mass, and even still more preferably not less than 20% by mass, on the basis of a total amount of the resin component constituting the adhesive layer, from the viewpoints of attaining a high adhesive strength of the resulting adhesive layer. On the other hand, the content of the tackifier resin in the adhesive layer is preferably not more than 30% by mass, more preferably not more than 20% by mass, still more

preferably not more than 10% by mass, and even still more preferably not more than 5% by mass, on the basis of a total amount of the resin component constituting the adhesive layer, from the viewpoints of reducing occurrence of adhesive transfer of the resulting adhesive layer.

The resin component constituting the adhesive layer may also contain an inorganic filler, if required, unless the object of the present invention is adversely affected. Examples of the inorganic filler include talc, clay, mica, calcium silicate, calcium carbonate, magnesium carbonate, aluminum hydroxide, magnesium hydroxide, calcium hydroxide, silica, alumina, titanium oxide, iron oxide, zinc oxide and magnesium oxide. When adding the inorganic filler to the resin component, the content of the inorganic filler in the adhesive layer is preferably not more than 20 parts by mass, and more preferably not more than 10 parts by mass, on the basis of 100 parts by mass of a total amount of the resin component constituting the adhesive layer.

In addition, the, resin component constituting the adhesive layer may also contain the other additives, if required, unless the object of the present invention is adversely affected. Examples of the other additives include a heat stabilizer, a light stabilizer, an ultraviolet absorber, an antioxidant, a lubricant, a colorant, an antistatic reagent, a flame retardant, a water repellent, a water-proofing reagent, a hydrophilizing reagent, a conductivity-imparting reagent, a thermal conductivity-imparting reagent, an electromagnetic shielding reagent, a transmission controller, a fluorescent reagent, a sliding reagent, a transparency-imparting reagent, an anti-blocking reagent, a metal deactivator and an antimicrobial reagent. Specific examples of the heat stabilizer include phosphorus-based heat stabilizers, lactone-based hat stabilizers and hydroxyl-based heat stabilizers. Of these heat stabilizers, preferred are lactone-based hat stabilizers. When adding the heat stabilizer to the resin component, from the viewpoint of preventing bleeding of the heat stabilizer from the adhesive layer, the content of the heat stabilizer in the adhesive layer is preferably not more than 3 parts by mass, and more preferably not more than 2 parts by mass, on the basis of 100 parts by mass of a total amount of the resin component constituting the adhesive layer.

[Substrate Layer]

The material of the substrate layer is not particularly limited, and is preferably a polyolefin-based resin or a polyester-based resin from the viewpoint of s high performance and a low price of the obtained laminate. Examples of the polyolefin-based resin include polypropylenes (such as homo polypropylenes, block polypropylenes and random polypropylenes), propylene-ethylene copolymers, low-density polyethylene, linear low-density polyethylene, high-density polyethylene and ethylene-$\alpha$-olefin copolymers. Examples of the polyester-based resin include polyethylene terephthalate (PET). The substrate layer may have either a single-layer structure or a multilayer structure having two or more layers. In the case where the substrate layer has two or more layers, the two or more layers may be formed of two or more kinds of resin materials that are different from each other.

In addition, the substrate layer may further contain additives, if required, unless the object of the present invention is adversely affected. Examples of the additives include a heat stabilizer, a light stabilizer, an ultraviolet absorber, an antioxidant, a lubricant, a colorant, an antistatic reagent, a flame retardant, a water repellent, a water-proofing reagent, a hydrophilizing reagent, a conductivity-imparting reagent, a thermal conductivity-imparting reagent, an electromagnetic shielding reagent, a transmission controller, a fluorescent reagent, a sliding reagent, a transparency-imparting reagent, an anti-blocking reagent, a metal deactivator and an antimicrobial reagent. The content of the additives in the substrate layer is preferably not more than 10 parts by mass, and more preferably not more than 5 parts by mass, on the basis of 100 parts by mass of the resin composition for the substrate layer, from the viewpoint of preventing bleeding of the additives from the substrate layer.

[Dimension of Laminate]

The thickness of the adhesive layer constituting the laminate of the present invention is not particularly limited, and is usually not less than 1 $\mu$m and not more than 200 $\mu$m, more preferably not less than 5 $\mu$m and not more than 150 $\mu$m, and still more preferably not less than 5 $\mu$m and not more than 100 $\mu$m.

Also, the thickness of the substrate layer is preferably not more than 500 $\mu$m, more preferably not more than 200 $\mu$m, and still more preferably not more than 100 $\mu$m.

[2] Process for Producing Laminate

The process for producing the above laminate is not particularly limited. For example, as the production process, there may be used (1) a co-extrusion molding method in which the resin composition containing the above hydrogenated copolymer and the resin constituting the substrate layer are co-extruded using a multilayer T-die extruder, etc.; (2) a coating method in which the resin composition containing the above hydrogenated copolymer is applied onto the substrate layer; (3) a compression molding method in which the resin composition containing the above hydrogenated copolymer

and the resin constituting the substrate layer are subjected to compression molding and laminated on each other; and the like.

<Resin Composition>

The above resin composition includes a resin component constituting the adhesive layer, and components that can be added to the resin component. The "resin component" as used herein means a component containing the hydrogenated copolymer which may also contain a tackifier resin, a polyolefin-based resin and the other resins, if required. That is, the resin composition means a composition containing the hydrogenated copolymer, and the resin composition containing the resin component constituted of the hydrogenated copolymer solely is also referred to as the "resin composition" as a matter of convenience.

In the case where the resin composition includes the components other than the hydrogenated copolymer, the resin composition may be produced by mixing the hydrogenated copolymer and the other components with each other using a mixer such as a Henschel mixer, a V blender, a ribbon blender, a tumbler blender and a conical blender, and then melting and kneading the resulting mixture using a single-screw or twin-screw extruder, a kneader, etc. The temperature used upon the melting and kneading may be appropriately controlled, and is usually from 150 to 300°C, and preferably from 160 to 250°C.

The thus obtained resin composition is preferably pelletized from the viewpoint of facilitated production of the laminate according to the present invention by an extrusion molding method.

When producing the laminate by a coating method, the laminate may be suitably produced by dissolving the resin composition in an organic solvent to prepare a solution thereof, applying the thus prepared solution onto a substrate layer, and then drying the resulting coating layer. The organic solvent is not particularly limited, as long as the resin composition can be dissolved therein. Examples of the organic solvent include cyclohexane, methylcyclohexane, n-hexane, n-heptane, benzene, toluene, a mixed solvent of toluene and ethanol, xylene, ethylbenzene, tetrahydrofuran, etc. These organic solvents may be used alone or in combination of any two or more thereof. Of these organic solvents, from the viewpoints of easiness of coating, facilitated production of the solution and easiness of drying, preferred are toluene, a mixed solvent of toluene and ethanol, xylene and ethylbenzene.

The concentration of the resin component in the solution is preferably from 5 to 50% by mass, more preferably from 5 to 40% by mass, and still more preferably from 5 to 30% by mass, from the viewpoints of easiness of coating, facilitated production of the solution and easiness of drying.

When producing the laminate by a co-extrusion molding method, the laminate may be suitably produced by melting and plasticizing the resin constituting the substrate layer and the resin composition constituting the adhesive layer, respectively, in separate extruders and thereafter merging the respective materials into a feed block die fitted at a tip end of the respective extruders, extruding the materials therethrough into a multilayer structure sheet, and then taking up the sheet into a film shape.

When producing the laminate by a compression molding method, the laminate may be suitably produced by laminating the resin composition of a pellet-like shape or a sheet-like shape on a substrate, compression-molding the thus laminated compositions while heating, and then cooling the resulting laminated sheet.

In the case where the resin composition used in the present invention is of a hot melt type, the laminate may be suitably produced using such an applicator as conventionally used for hot melts, by heating and melting the resin composition, applying the obtained molten material onto a substrate layer, and then cooling the thus applied material.

[3] Protective Film

The protective film of the present invention includes the above laminate.

For the purpose of protecting an adhesive surface of the protective film (a surface of the adhesive layer which is located on a side to be attached onto an adherend), the protective film may be provided, if required, with such a configuration that a release liner is laminated on the adhesive surface (i.e., in the form of a protective film with a release liner). As a base material constituting the release liner, there may be used a paper, a synthetic resin film or the like. Of these base materials, a synthetic resin film is preferably used because of an excellent surface smoothness thereof. The thickness of the release liner may be adjusted, for example, to the range of from 5 to 200 μm, and is preferably in the range of from 10 to 100 μm. The surface of the release liner onto which the adhesive layer is adhered may be subjected to releasing or antifouling treatment using conventionally known releasing reagents (such as silicone-based releasing reagents, fluorine-based releasing reagents, long-chain alkyl-based releasing reagents and fatty acid amide-based releasing reagents) or a silica powder, etc.

Examples

The present invention will be described in more detail below by referring to the following examples. It should be noted, however, that the following examples are only illustrative and not intended to limit the invention thereto. Meanwhile, β-farnesene (purity: 97.6% by mass; available from Amyris Biotechnologies Inc.) was purified using a 3 Å molecular sieve and distilled under a nitrogen atmosphere to remove hydrocarbon-based impurities such as zingiberene, bisabolene, farnesene epoxide, farnesol isomers, E,E-farnesol, squalene, ergosterol and several kinds of dimers of farnesene therefrom, and the thus purified β-farnesene was used in the following polymerization.

(1) Measurement of Molecular Weight Distribution (Mw/Mn) and Peak Top Molecular Weight (Mp).

The weight-average molecular weight (Mw) and the molecular weight distribution (Mw/Mn) of each of the hydrogenated block copolymers produced in the respective Examples and Comparative Examples were measured by GPC (gel permeation chromatography) in terms of a molecular weight of polystyrene as a reference standard substance. Also, the peak top molecular weight (Mp) of the hydrogenated block copolymer was determined from a position of a peak top of the molecular weight distribution (Mw/Mn). The measuring devices and conditions used in the above measurement are as follows.

- Apparatus: GPC device "GPC8020" available from Tosoh Corp.
- Separating column: "TSKgelG4000HXL" available from Tosoh Corp.
- Detector: "RI-8020" available from Tosoh Corp.
- Eluent: Tetrahydrofuran
- Eluent flow rate: 1.0 mL/min
- Sample concentration: 5 mg/10 mL
- Column temperature: 40°C

(2) Method of Measuring Hydrogenation Rate

In the respective Examples and Comparative Examples, the block copolymer and the hydrogenated block copolymer obtained after hydrogenating the block copolymer were respectively dissolved in a deuterated chloroform solvent, and each of the resulting solutions was subjected to $^1$H-NMR measurement at 50°C using "Lambda-500" available from JEOL Ltd. The hydrogenation rate of the polymer block (B) in the hydrogenated block copolymer was calculated from the peak of protons contained in carbon-carbon double bonds observed in the range of from 4.5 to 6.0 ppm in the resulting spectrum, according to the following formula.

Hydrogenation Rate = {1 - (number of moles of carbon-carbon double bonds contained per 1 mole of hydrogenated block copolymer)/(number of moles of carbon-carbon double bonds contained per 1 mole of block copolymer} x 100 (mol%)

(3) Measurement of Styrene Content

The $^1$H-NMR measurement was conducted by the same method as defined in the above (2), and the content of styrene in the hydrogenated block copolymer was determined from the thus measured spectrum.

(4) Measurement of Peel Strength (at 23°C)

The protective film obtained in each of the following Examples and Comparative Examples was adhered onto a plain acrylic resin plate "COMOGLAS P" (tradename) (thickness: 3 mm) available from Kuraray Co., Ltd., such that the adhesive layer of the protective film came into contact with the acrylic resin plate. The resulting laminated plate was cut into a test piece having a width of 25 mm. The test piece was rolled and pressed by a 2 kg rubber roller at a rate of 20 mm/min from a substrate layer side thereof, and then allowed to stand in an atmosphere having a temperature of 23±1°C and a humidity of 50±5% for 30 min. Thereafter, the test piece was subjected to peel test to measure a 180° peel strength of the protective film therefrom at a peel rate of 300 mm/min according to JIS Z 0237, and the thus measured 180° peel strength was defined as a peel strength (at 23°) of the protective film.

The peel strength (at 23°) of the protective film is preferably not less than 3.0 N/25 mm, and more preferably not less than 3.5 N/25 mm. When the peel strength (at 23°) lies within the aforementioned range, the resulting protective film is excellent in adhesion to an adherend.

(5) Measurement of Peel Strength (at 60°C)

The same procedure as in the above (4) was repeated except that after being rolled and pressed by a 2 kg rubber roller, the test piece was allowed to stand at a temperature of 60±1°C. The thus measured peel strength was defined as a peel strength (at 60°) of the protective film.
The peel strength (at 60°) of the protective film is preferably not less than 3.0 N/25 mm, and more preferably not less than 3.5 N/25 mm. When the peel strength (at 60°) lies within the aforementioned range, the resulting protective film is excellent in adhesion to an adherend.

(6) Temperature-Dependence of Peel Strength

From the measurement results of (4) the peel strength (23°C) and (5) the peel strength (60°C), the temperature-dependence of the peel strength was determined according to the following formula.

$$\text{Temperature-Dependence of Peel Strength} = \text{Peel Strength (at 60°C)/Peel Strength (at 23°C)}$$

The temperature-dependence of the peel strength of the protective film is preferably not less than 0.50 and less than 1.50, and more preferably not less than 0.6 and less than 1.40. When the temperature-dependence of the peel strength lies within the aforementioned range, the resulting protective film is excellent in stability of adhesion to an adherend. When the temperature-dependence of the peel strength is less than 0.50, the protective film tends to be insufficient in peel strength after the temperature is raised upon annealing or transportation. When the temperature-dependence of the peel strength is not less than 1.50, the protective film tends to exhibit an excessively high peel strength after the temperature is raised upon annealing or transportation, and therefore tends to be difficult to peel from an adherend.

(7) Evaluation of Adhesive Transfer

The same peel test as in the above (4) was conducted except that after being rolled and pressed by a 2 kg rubber roller, the test piece was allowed to stand at a temperature of 80±1°C for 1 h, and then cooled at an ambient temperature of 25°C for 0.5 h. The surface of the acrylic resin plate was observed by naked eyes to examine whether or not any adhesive transfer (transfer of components of the adhesive layer) occurred thereon.
When the adhesive transfer is preferably Rank A or B, and more preferably Rank A, the resulting protective film is excellent in anti-adhesive transfer property.

A: No adhesive transfer occurred.
B: Adhesive transfer occurred on less than 10% of a peeled area.
C: Adhesive transfer occurred on 10% or more of a peeled area.

[Production Example 1]

<Production of Hydrogenated Block Copolymer (A1)>

A pressure reaction vessel previously purged with nitrogen and then dried was charged with 62.4 kg of cyclohexane as a solvent and 61.2 g of sec-butyl lithium (in the form of a 10.5% by mass cyclohexane solution) as an anionic polymerization initiator. The contents of the reaction vessel were heated to 50°C, and then 1.40 kg of styrene (1) was added thereto, followed by polymerizing the contents of the reaction vessel for 1 h. Successively, 12.8 kg of β-farnesene was added to the reaction vessel, followed by polymerizing the contents of the reaction vessel for 2 h. Furthermore, 1.40 kg of styrene (2) was added to the reaction vessel, followed by polymerizing the contents of the reaction vessel for 1 h, thereby obtaining a reaction solution containing a polystyrene-poly(β-farnesene)-polystyrene triblock copolymer. Added into the reaction solution was palladium carbon (amount of palladium supported: 5% by mass) as a hydrogenation catalyst which was used in an amount of 5% by mass on the basis of the above block copolymer,

and the block copolymer was subjected to hydrogenation reaction under a hydrogen pressure of 2 MPa at a temperature of 150°C for 10 h. The obtained reaction mixture was allowed to stand for cooling and pressure releasing, and then subjected to filtration to remove the palladium carbon therefrom. The resulting filtrate was concentrated and further vacuum-dried, thereby obtaining a hydrogenated product of the polystyrene-poly(β-farnesene)-polystyrene triblock copolymer (hereinafter referred to as a "hydrogenated block copolymer (A1)"). The formulations of various respective raw materials as well as the measurement results of various properties of the thus obtained hydrogenated block copolymer (A1) are shown in Table 1.

[Production Example 2] to [Production Example 4]

<Production of Hydrogenated Block Copolymers (A2) to (A4)>

The same procedure as in Production Example 1 was repeated except that the formulations of various respective raw materials were changed as shown in Table 1, thereby obtaining hydrogenated block copolymers (A2) to (A4). The measurement results of various properties of the thus obtained hydrogenated block copolymers (A2) to (A4) are shown in Table 1.

[Production Example 5]

<Production of Hydrogenated Block Copolymer (A5)>

A pressure reaction vessel previously purged with nitrogen and then dried was charged with 62.4 kg of cyclohexane as a solvent and 107.2 g of sec-butyl lithium (in the form of a 10.5% by mass cyclohexane solution) as an anionic polymerization initiator. The contents of the reaction vessel were heated to 50°C, and then 2.34 kg of styrene (1) was added thereto, followed by polymerizing the contents of the reaction vessel for 1 h. Successively, a mixture of 5.46 kg of β-farnesene and 5.46 kg of isoprene was added to the reaction vessel, followed by polymerizing the contents of the reaction vessel for 2 h. Furthermore, 2.34 kg of styrene (2) was added to the reaction vessel, followed by polymerizing the contents of the reaction vessel for 1 h, thereby obtaining a reaction solution containing a polystyrene-poly(β-farnesene/isoprene)-polystyrene triblock copolymer. Added into the reaction solution was palladium carbon (amount of palladium supported: 5% by mass) as a hydrogenation catalyst which was used in an amount of 5% by mass on the basis of the above block copolymer, and the block copolymer was subjected to hydrogenation reaction under a hydrogen pressure of 2 MPa at a temperature of 150°C for 10 h. The obtained reaction mixture was allowed to stand for cooling and pressure releasing, and then subjected to filtration to remove the palladium carbon therefrom. The resulting filtrate was concentrated and further vacuum-dried, thereby obtaining a hydrogenated product of the polystyrene-poly(β-farnesene/isoprene) triblock copolymer (hereinafter referred to as a "hydrogenated block copolymer (A5)"). The formulations of various respective raw materials as well as the measurement results of various properties of the thus obtained hydrogenated block copolymer (A5) are shown in Table 1.

[Production Example 6] to [Production Example 8]

<Production of Hydrogenated Block Copolymers (A6) to (A8)>

The same procedure as in Production Example 5 was repeated except that the formulations of various respective raw materials were changed as shown in Table 1, thereby obtaining hydrogenated block copolymers (A6) to (A8). The measurement results of various properties of the thus obtained hydrogenated block copolymers (A6) to (A8) are shown in Table 1.

[Comparative Production Example 1]

<Production of Hydrogenated Block Copolymer (A'1)>

A pressure reaction vessel previously purged with nitrogen and then dried was charged with 62.4 kg of cyclohexane as a solvent and 51.0 g of sec-butyl lithium (in the form of a 10.5% by mass cyclohexane solution) as an anionic polymerization initiator. The contents of the reaction vessel were heated to 50°C, and then 2.34 kg of styrene (1) was added thereto, followed by polymerizing the contents of the reaction vessel for 1 h. Successively, 10.92 kg of β-farnesene was added to the reaction vessel, followed by polymerizing the contents of the reaction vessel for 2 h. Furthermore, 2.34 kg of styrene (2) was added to the reaction vessel, followed by polymerizing the contents of the reaction vessel for 1 h, thereby obtaining a reaction solution containing a polystyrene-poly(β-farnesene)-polystyrene

triblock copolymer. Added into the reaction solution was palladium carbon (amount of palladium supported: 5% by mass) as a hydrogenation catalyst which was used in an amount of 5% by mass on the basis of the above block copolymer, and the block copolymer was subjected to hydrogenation reaction under a hydrogen pressure of 2 MPa at a temperature of 150°C for 2 h. The obtained reaction mixture was allowed to stand for cooling and pressure releasing, and then subjected to filtration to remove the palladium carbon therefrom. The resulting filtrate was concentrated and further vacuum-dried, thereby obtaining a hydrogenated product of the polystyrene-poly(β-farnesene)-polystyrene triblock copolymer (hereinafter referred to as a "hydrogenated block copolymer (A'1)"). The formulations of various respective raw materials as well as the measurement results of various properties of the thus obtained hydrogenated block copolymer (A'1) are shown in Table 1.

[Comparative Production Example 2]

<Production of Hydrogenated Block Copolymer (A'2)>

A pressure reaction vessel previously purged with nitrogen and then dried was charged with 62.4 kg of cyclohexane as a solvent and 209.7 g of sec-butyl lithium (in the form of a 10.5% by mass cyclohexane solution) as an anionic polymerization initiator. The contents of the reaction vessel were heated to 50°C, and then 1.87 kg of styrene (1) was added thereto, followed by polymerizing the contents of the reaction vessel for 1 h. Successively, 17.06 kg of isoprene was added to the reaction vessel, followed by polymerizing the contents of the reaction vessel for 2 h. Furthermore, 1.87 kg of styrene (2) was added to the reaction vessel, followed by polymerizing the contents of the reaction vessel for 1 h, thereby obtaining a reaction solution containing a polystyrene-poly(isoprene)-polystyrene triblock copolymer. Added into the reaction solution was palladium carbon (amount of palladium supported: 5% by mass) as a hydrogenation catalyst which was used in an amount of 5% by mass on the basis of the above block copolymer, and the block copolymer was subjected to hydrogenation reaction under a hydrogen pressure of 2 MPa at a temperature of 150°C for 10 h. The obtained reaction mixture was allowed to stand for cooling and pressure releasing, and then subjected to filtration to remove the palladium carbon therefrom. The resulting filtrate was concentrated and further vacuum-dried, thereby obtaining a hydrogenated product of the polystyrene-poly(isoprene)-polystyrene triblock copolymer (hereinafter referred to as a "hydrogenated block copolymer (A'2)"). The formulations of various respective raw materials as well as the measurement results of various properties of the thus obtained hydrogenated block copolymer (A'2) are shown in Table 1.

[Comparative Production Example 3]

<Production of Hydrogenated Block Copolymer (A'3)>

A pressure reaction vessel previously purged with nitrogen and then dried was charged with 62.4 kg of cyclohexane as a solvent, 209.7 g of sec-butyl lithium (in the form of a 10.5% by mass cyclohexane solution) as an anionic polymerization initiator and 130.0 g of tetrahydrofuran as a Lewis base. The contents of the reaction vessel were heated to 50°C, and then 2.34 kg of styrene (1) was added thereto, followed by polymerizing the contents of the reaction vessel for 1 h. Successively, 10.92 kg of butadiene was added to the reaction vessel, followed by polymerizing the contents of the reaction vessel for 2 h. Furthermore, 2.34 kg of styrene (2) was added to the reaction vessel, followed by polymerizing the contents of the reaction vessel for 1 h, thereby obtaining a reaction solution containing a polystyrene-poly(butadiene)-polystyrene triblock copolymer. Added into the reaction solution was palladium carbon (amount of palladium supported: 5% by mass) as a hydrogenation catalyst which was used in an amount of 5% by mass on the basis of the above block copolymer, and the block copolymer was subjected to hydrogenation reaction under a hydrogen pressure of 2 MPa at a temperature of 150°C for 10 h. The obtained reaction mixture was allowed to stand for cooling and pressure releasing, and then subjected to filtration to remove the palladium carbon therefrom. The resulting filtrate was concentrated and further vacuum-dried, thereby obtaining a hydrogenated product of the polystyrene-poly(butadiene)-polystyrene triblock copolymer (hereinafter referred to as a "hydrogenated block copolymer (A'3)"). The formulations of various respective raw materials as well as the measurement results of various properties of the thus obtained hydrogenated block copolymer (A'3) are shown in Table 1.

[Example 1]

In Example 1, the hydrogenated block copolymer (A1) obtained in Production Example 1 was directly used as a resin constituting an adhesive layer.

The hydrogenated block copolymer (A1) was added to toluene to prepare a toluene solution thereof having a resin concentration of 30% by mass. The thus prepared toluene solution was applied on a 50 μm-thick polyethylene

terephthalate (PET) film "TEIJIN TETORON FILM G2" (tradename) available from Teijin DuPont Films Japan Ltd., using a doctor blade, and then dried at 110°C for 5 min, thereby producing a protective film including the PET film as a substrate layer and an adhesive layer constituted of the hydrogenated block copolymer (A1) which was formed on the substrate layer. The thickness of the adhesive layer in the protective film was 12 μm.

The thus produced protective film was evaluated for the above items. The results are shown in Table 2.

[Examples 2 to 6, 12 and 13]

The same procedure as in Example 1 was repeated except for using each of the hydrogenated block copolymers (A2) to (A8) as a resin constituting the adhesive layer. The results are shown in Table 2.

[Example 7]

The hydrogenated block copolymer (A2) and a tackifier resin were compounded at proportions shown in Table 2 to prepare a resin composition, and toluene was further added to the resin composition to prepare a toluene solution thereof having a resin concentration of 30% by mass. The thus prepared toluene solution was applied on a 50 μm-thick PET film "TEIJIN TETORON FILM G2" (tradename) available from Teijin DuPont Films Japan Ltd., using a doctor blade, and then dried at 110°C for 5 min, thereby producing a protective film including the PET film as a substrate layer and an adhesive layer constituted of the resin composition which was formed on the PET film. The thickness of the adhesive layer in the protective film was 12 μm.

The thus produced protective film was evaluated for the above items. The results are shown in Table 2.

[Examples 8 to 11]

The same procedure as in Example 7 was repeated except that the kinds and contents of respective raw materials of the resin composition were changed as shown in Table 2. The results are shown in Table 2.

[Example 14]

The hydrogenated block copolymer (A1) and a random polypropylene "Prime Polypro F327" (tradename) available from Prime Polymer Co., Ltd., were compounded at proportions shown in Table 4, and melted and kneaded at 200°C using a twin-screw extruder to thereby prepare a resin composition. The thus prepared resin composition was interposed between a releasing reagent-coated surface of a 38 μm-thick PET film "E7007" (product number) (one-side silicone releasing reagent-coated film) available from TOYOBO Co., Ltd., and a releasing reagent-uncoated surface thereof through a 60 μm-thick polyimide film as a spacer, and the resulting laminated film was compression-molded at 220°C under a pressure of 10 MPa for 3 min, thereby producing a protective film including the PET film as a substrate layer and an adhesive layer constituted of the resin composition which was formed on the substrate (releasing reagent-uncoated surface) of the PET film. The thickness of the adhesive layer in the protective film was 130 μm. The thus produced protective film was evaluated for the above items. The results are shown in Table 4.

[Examples 15 to 22]

The same procedure as in Example 14 was repeated except that the kinds and contents of respective raw materials of the resin composition were changed as shown in Table 4. The results are shown in Table 4.

[Comparative Examples 1 to 3]

The same procedure as in Example 1 was repeated except for using each of the hydrogenated block copolymers (A'1) to (A'3) as a resin constituting the adhesive layer. The results are shown in Table 3.

[Comparative Examples 4 and 5]

The same procedure as in Example 7 was repeated except that the kinds and contents of respective raw materials of the resin composition were changed as shown in Table 3. The results are shown in Table 3.

[Comparative Examples 6 to 11]

The same procedure as in Example 14 was repeated except that the respective hydrogenated block copolymers

(A'2) and (A'3), the random polypropylene and the polyolefin elastomer as shown in Table 5 were compounded at proportions shown in Table 5. The results are shown in Table 5.

[Table 1]

| | Production Examples | | | | | | | | Comparative Production Examples | | |
|---|---|---|---|---|---|---|---|---|---|---|---|
| | 1 | 2 | 3 | 4 | 5 | 6 | 7 | 8 | 1 | 2 | 3 |
| Hydrogenated block copolymer | (A1) | (A2) | (A3) | (A4) | (A5) | (A6) | (A7) | (A8) | (A'1) | (A'2) | (A'3) |
| Amounts used [kg] | | | | | | | | | | | |
| Cyclohexane | 62.4 | 62.4 | 62.4 | 62.4 | 62.4 | 62.4 | 62.4 | 62.4 | 62.4 | 62.4 | 62.4 |
| sec-Butyl lithium | 0.0612 | 0.0510 | 0.2447 | 0.0517 | 0.1072 | 0.1184 | 0.1210 | 0.1210 | 0.0510 | 0.2097 | 0.2097 |
| Styrene (1) | 1.40 | 2.34 | 3.12 | 3.90 | 2.34 | 2.34 | 1.09 | 1.09 | 2.34 | 1.87 | 2.34 |
| Styrene (2) | 1.40 | 2.34 | 3.12 | 3.90 | 2.34 | 2.34 | 1.09 | 1.09 | 2.34 | 1.87 | 2.34 |
| β-Farnesene | 12.8 | 10.9 | 14.6 | 7.8 | 5.46 | 6.08 | 10.72 | 10.74 | 10.92 | | |
| Butadiene | | | | | | 4.84 | | 2.68 | | | 10.92 |
| Isoprene | | | | | 5.46 | | 2.70 | | | 17.06 | |
| Tetrahydrofuran | | | | | | | | | | | 0.13 |
| Styrene content (% by mass) | 18.0 | 30.0 | 30.0 | 50.0 | 30.0 | 30.0 | 14.0 | 14.0 | 30.0 | 18.0 | 30.0 |
| (b1)/(b) [% by mass] (*1) | 100 | 100 | 100 | 100 | 50 | 56 | 80 | 80 | 100 | 0 | 0 |
| (a)/(b) [mass ratio] (*2) | 18/82 | 30/70 | 30/70 | 50/50 | 30/70 | 30/70 | 14/86 | 14/86 | 30/70 | 18/82 | 30/70 |
| Polymer skeleton (*3) | St-F-St | St-F-St | St-F-St | St-F-St | St-(F/Ip)-S | St-(F/B d)-S | St-(F/Ip)-S | St-(F/Bd)-S | St-F-St | St-Ip-St | St-Bd-St |
| Properties | | | | | | | | | | | |
| Peak top molecular weight (Mp) | 200,000 | 223,000 | 53,000 | 218,000 | 124,000 | 118,000 | 97,000 | 111,000 | 220,000 | 97,000 | 78,000 |
| Molecular weight distribution (Mw/Mn) | 1.23 | 1.13 | 1.03 | 1.22 | 1.06 | 1.04 | 1.05 | 1.04 | 1.10 | 1.05 | 1.04 |
| Hydrogenation rate [%] (*4) | 93.2 | 91.0 | 90.2 | 90.4 | 98.1 | 98.5 | 98.0 | 97.9 | 42.1 | 98.2 | 98.3 |

Note (*1): (b1)/(b): Content of a constitutional unit (b1) derived from farnesene in a whole amount of a constitutional unit (b) derived from a conjugated diene.
(*2): (a)/(b): Mass ratio of a whole amount of a constitutional unit (a) to a whole amount of a constitutional unit (b).
(*3): St-F-St: Polystyrene-poly(β-farnesene)-polystyrene triblock copolymer. St-(F/Ip)-S: Polystyrene-poly(β-farnesene/isoprene)-polystyrene triblock copolymer. St-(F/Bd)-S: Polystyrene-poly(β-farnesene/butadiene)-polystyrene triblock copolymer. St-IP-St: Polystyrene-polyisoprene-polystyrene triblock copolymer. St-Bd-St: Polystyrene-polybutadiene-polystyrene triblock copolymer.
(*4): Hydrogenation rate of carbon-carbon double bonds in a constitutional unit (b) derived from a conjugated diene.

[Table 2]

| | Styrene content (% by mass) | Hydrogenation rate (mol%) | Examples | | | | | | | | | | | | |
|---|---|---|---|---|---|---|---|---|---|---|---|---|---|---|---|
| | | | 1 | 2 | 3 | 4 | 5 | 6 | 7 | 8 | 9 | 10 | 11 | 12 | 13 |
| Adhesive layer | | | | | | | | | | | | | | | |
| Hydrogenated block copolymer (A1) (% by mass) | 18.0 | 93.2 | 100 | | | | | | | | | | 80 | | |
| Hydrogenated block copolymer (A2) (% by mass) | 30.0 | 91.0 | | 100 | | | | | 95 | 90 | 80 | | | | |
| Hydrogenated block copolymer (A3) (% by mass) | 30.0 | 90.2 | | | 100 | | | | | | | | | | |
| Hydrogenated block copolymer (A4) (% by mass) | 50.0 | 90.4 | | | | 100 | | | | | | | | | |
| Hydrogenated block copolymer (A5) (% by mass) | 30.0 | 98.1 | | | | | 100 | | | | | | | | |
| Hydrogenated block copolymer (A6) (% by mass) | 30.0 | 98.5 | | | | | | 100 | | | | 80 | | | |
| Hydrogenated block copolymer (A7) (% by mass) | 14.0 | 98.0 | | | | | | | | | | | | 100 | |
| Hydrogenated block copolymer (A8) (% by mass) | 14.0 | 97.9 | | | | | | | | | | | | | 100 |
| Tackifier resin (*5) (% by mass) | - | - | | | | | | | 5 | 10 | 20 | 20 | 20 | | |
| Evaluation | | | | | | | | | | | | | | | |
| (a) Peel strength (at 23°C) (N/25 mm) | | | 8.83 | 6.10 | 4.10 | 3.70 | 9.48 | 6.60 | 10.0 | 11.5 | 16.8 | 8.5 | 13.5 | 10.8 | 10.3 |
| (b) Peel strength (at 60°C) (N/25 mm) | | | 6.65 | 4.80 | 3.50 | 4.10 | 7.54 | 8.72 | 6.5 | 7.6 | 12.5 | 6.0 | 10.0 | 8.3 | 8 |
| Temperature-dependence of peel strength; (b)/(a) (-) | | | 0.75 | 0.79 | 0.85 | 1.11 | 0.80 | 1.32 | 0.65 | 0.66 | 0.75 | 0.70 | 0.74 | 0.77 | 0.78 |
| Adhesive transfer (-) | | | A | A | A | A | A | A | A | A | A | B | B | A | A |

Note (*5): Alicyclic petroleum resin "ARKON P-125" (softening point: 125±5°C) available from Arakawa Chemical Industries, Ltd.

[Table 3]

| | Styrene content (% by mass) | Hydrogenation rate (mol%) | Comparative Examples | | | | |
|---|---|---|---|---|---|---|---|
| | | | 1 | 2 | 3 | 4 | 5 |
| Adhesive layer | | | | | | | |
| Hydrogenated block copolymer (A'1) (% by mass) | 30.0 | 42.1 | 100 | | | | |
| Hydrogenated block copolymer (A'2) (% by mass) | 18.0 | 98.2 | | 100 | | 80 | |
| Hydrogenated block copolymer (A'3) (% by mass) | 30.0 | 98.3 | | | 100 | | 80 |
| Tackifier resin (*5) (% by mass) | - | - | | | | 20 | 20 |
| Evaluation | | | | | | | |
| (a) Peel strength (at 23°C) (N/25 mm) | | | 7.20 | 0.2 | 0.2 | 5.8 | 6.4 |
| (b) Peel strength (at 60°C) (N/25 mm) | | | 3.10 | 0 | 2.8 | 2.9 | 12.4 |
| Temperature-dependence of peel strength; (b)/(a) (-) | | | 0.43 | 0 | 14.0 | 0.50 | 1.92 |
| Adhesive transfer (-) | | | B | A | A | C | B |
| Note (*5): Alicyclic petroleum resin "ARKON P-125" (softening point: 125±5°C) available from Arakawa Chemical Industries, Ltd. | | | | | | | |

[Table 4]

| | Styrene content (% by mass) | Hydrogenation rate (mol%) | Examples | | | | | | | | |
|---|---|---|---|---|---|---|---|---|---|---|---|
| | | | 14 | 15 | 16 | 17 | 18 | 19 | 20 | 21 | 22 |
| Adhesive layer | | | | | | | | | | | |
| Hydrogenated block copolymer (A1) (% by mass) | 18 | 93.0 | 100 | | | 100 | | | 100 | | |
| Hydrogenated block copolymer (A7) (% by mass) | 14 | 98.0 | | 100 | | | 100 | | | 100 | |
| Hydrogenated block copolymer (A8) (% by mass) | 14 | 97.8 | | | 100 | | | 100 | | | 100 |
| Random polypropylene (*6) (% by mass) | - | - | 10 | 10 | 10 | 15 | 15 | 15 | | | |
| Polyolefin elastomer (*7) (% by mass) | - | - | | | | | | | 50 | 50 | 50 |
| Evaluation | | | | | | | | | | | |
| (a) Peel strength (at 23°C) (N/25 mm) | | | 9.8 | 8.2 | 7.4 | 7.1 | 5.6 | 5.5 | 6.5 | 4.7 | 4.5 |
| (b) Peel strength (at 60°C) (N/25 mm) | | | 9.1 | 6.9 | 6.8 | 6.5 | 6.1 | 4.9 | 8.5 | 6.7 | 6.0 |
| Temperature-dependence of peel strength; (b)/(a) (-) | | | 0.93 | 0.84 | 0.92 | 0.92 | 1.09 | 0.89 | 1.31 | 1.43 | 1.33 |
| Adhesive transfer (-) | | | A | A | A | A | A | A | A | A | A |

Note (*6): Random polypropylene "F327" (MFR: 7.0 g/10 min (as measured at 230°C and 21 N)) available from Prime Polymer Co., Ltd.
(*7): Polyolefin elastomer "VM6102" (polypropylene-based elastomer; ethylene content: 16 wt%; MFR: 3 g/10 min (as measured at 230°C and 21 N)) available from Exxon Mobile Corporation.

[Table 5]

| | Styrene content (% by mass) | Hydrogenation rate (mol%) | Comparative Examples | | | | | |
|---|---|---|---|---|---|---|---|---|
| | | | 6 | 7 | 8 | 9 | 10 | 11 |
| | | | | | | | | |
| Hydrogenated block copolymer (A'2) (% by mass) | 18 | 98.2 | 100 | | 100 | | 100 | |
| Hydrogenated block copolymer (A'3) (% by mass) | 30 | 98.3 | | 100 | | 100 | | 100 |
| Random polypropylene (*6) (% by mass) | - | - | 10 | 10 | 15 | 15 | | |
| Polyolefin elastomer (*7) (% by mass) | - | - | | | | | 50 | 50 |
| Evaluation | | | | | | | | |
| (a) Peel strength (at 23°C) (N/25 mm) | | | 0.2 | 0.2 | 0.2 | 0.1 | 0.1 | 0.1 |
| (b) Peel strength (at 60°C) (N/25 mm) | | | 1.2 | 1.5 | 1.1 | 0.8 | 3.2 | 2.9 |
| Temperature-dependence of peel strength; (b)/(a) (-) | | | 6.0 | 7.5 | 5.5 | 8.0 | 32.0 | 29.0 |
| Adhesive transfer (-) | | | A | A | A | A | A | A |
| Note (*6): Random polypropylene "F327" (MFR: 7.0 g/10 min (as measured at 230°C and 21 N)) available from Prime Polymer Co., Ltd.<br>(*7): Polyolefin elastomer "VM6102" (polypropylene-based elastomer; ethylene content: 16 wt%; MFR: 3 g/10 min (as measured at 230°C and 21 N)) available from Exxon Mobile Corporation. | | | | | | | | |

As shown in Tables 1 to 5, it was confirmed that the protective films obtained in Examples 1 to 22 were excellent in adhesive property and hardly suffered from occurrence of adhesive transfer. Also, it was confirmed that the protective films obtained in Examples 1 to 22 had a less temperature-dependence of a peel strength thereof, exhibited a less change in peel strength with the increase in temperature, and therefore were excellent in stability of an adhesive property thereof. In addition, from the results of Examples 14 to 22, it was confirmed that even when adding the polyolefin-based resin to the adhesive layer, the protective films obtained in these Examples exhibited an excellent peel strength at both of 23°C and 60°C, and hardly suffered from occurrence of adhesive transfer.

## Claims

1. A laminate comprising an adhesive layer and a substrate layer, the adhesive layer comprising a hydrogenated product of a copolymer comprising a constitutional unit (a) derived from an aromatic vinyl compound and a constitutional unit (b) derived from a conjugated diene,
a content of a constitutional unit (b1) derived from farnesene in a whole amount of the constitutional unit (b) derived from the conjugated diene being from 1 to 100% by mass, and a content of a constitutional unit (b2) derived from a conjugated diene other than farnesene in a whole amount of the constitutional unit (b) derived from the conjugated diene being from 0 to 99% by mass, and
a hydrogenation rate of carbon-carbon double bonds in the constitutional unit (b) derived from the conjugated diene being 50 mol% or more.

2. The laminate according to claim 1, wherein a mass ratio of a whole amount of the constitutional unit (a) derived from the aromatic vinyl compound to a whole amount of the constitutional unit (b) derived from the conjugated diene [(a)/(b)] is from 1/99 to 99/1.

3. The laminate according to claim 1 or 2, wherein the farnesene is β-farnesene.

4. The laminate according to any one of claims 1 to 3, wherein a peak top molecular weight (Mp) of the hydrogenated

product of the copolymer is from 4,000 to 1,500,000.

**5.** The laminate according to any one of claims 1 to 4, wherein a molecular weight distribution (Mw/Mn) of the hydrogenated product of the copolymer is from 1 to 4.

**6.** The laminate according to any one of claims 1 to 5, wherein the aromatic vinyl compound is styrene.

**7.** The laminate according to any one of claims 1 to 6, wherein the conjugated diene other than farnesene is at least one compound selected from the group consisting of isoprene, butadiene and myrcene.

**8.** The laminate according to any one of claims 1 to 7, wherein the hydrogenated product of the copolymer is a hydrogenated product of a block copolymer comprising a polymer block (A) comprising the constitutional unit (a) derived from the aromatic vinyl compound as a main component and a polymer block (B) comprising the constitutional unit (b) derived from the conjugated diene as a main component.

**9.** The laminate according to claim 8, wherein a hydrogenation rate of carbon-carbon double bonds in the polymer block (B) is 50 mol% or more.

**10.** The laminate according to any one of claims 1 to 7, wherein the hydrogenated product of the copolymer is a hydrogenated product of a random copolymer obtained by subjecting the constitutional unit (a) derived from the aromatic vinyl compound, the constitutional unit (b1) derived from farnesene, and the constitutional unit (b2) derived from the conjugated diene other than farnesene to random polymerization.

**11.** The laminate according to any one of claims 1 to 10, wherein the substrate layer comprises a polyolefin-based resin or a polyester-based resin.

**12.** A protective film comprising the laminate according to any one of claims 1 to 11.

**13.** A process for producing the laminate according to any one of claims 1 to 11, comprising the step of co-extruding a resin composition comprising the hydrogenated product of the copolymer and a resin constituting the substrate layer.

**14.** A process for producing the laminate according to any one of claims 1 to 11, comprising the step of compression-molding a resin composition comprising the hydrogenated product of the copolymer and a resin constituting the substrate layer to obtain the laminate.

**INTERNATIONAL SEARCH REPORT**

International application No. PCT/JP2014/056497

A. CLASSIFICATION OF SUBJECT MATTER

*C09J7/02*(2006.01)i, *B32B27/00*(2006.01)i, *C09J109/06*(2006.01)i, *C09J125/10*(2006.01)i, *C09J153/02*(2006.01)i

According to International Patent Classification (IPC) or to both national classification and IPC

B. FIELDS SEARCHED

Minimum documentation searched (classification system followed by classification symbols)
C09J7/02, B32B27/00, C09J109/06, C09J125/10, C09J153/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus(STN), REGISTRY(STN)

C. DOCUMENTS CONSIDERED TO BE RELEVANT

| Category* | Citation of document, with indication, where appropriate, of the relevant passages | Relevant to claim No. |
|---|---|---|
| X | JP 2012-502135 A (Amyris Biotechnologies, Inc.), 26 January 2012 (26.01.2012), claims 1, 6, 12, 21, 22, 25, 31; paragraphs [0125], [0129], [0154] to [0156], [0211], [0212], [0247] to [0256]; example 4 & EP 2334707 A1 & WO 2010/027463 A1 & KR 10-2011-0065505 A & CN 102203145 A | 1-14 |
| A | WO 2012/018682 A1 (AMYRIS, INC.), 09 February 2012 (09.02.2012), claims; [00150] to [00152], [00231], [00232], [00266] to [00276] & US 2013/0123379 A1 & EP 2601229 A1 & CN 103052664 A | 1-14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 21 May, 2014 (21.05.14) | 03 June, 2014 (03.06.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No. PCT/JP2014/056497

C (Continuation). DOCUMENTS CONSIDERED TO BE RELEVANT

| Category* | Citation of document, with indication, where appropriate, of the relevant passages | Relevant to claim No. |
|---|---|---|
| P,X | WO 2013/183570 A1 (Kuraray Co., Ltd., Amyris, Inc.), 12 December 2013 (12.12.2013), claims 1, 2, 4 to 8; paragraphs [0027], [0036] to [0039] (Family: none) | 1-9,11-14 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5194923 A
- JP 2010126711 A
- JP 2012502135 A
- JP 2012502136 A
- JP 2011132298 A